Europäisches Patentamt

European Patent Office

Office européen des brevets

(19)

(11) Publication number: **0 015 922**
**B1**

(12) **EUROPEAN PATENT SPECIFICATION**

(45) Date of publication of patent specification: **13.06.84**

(21) Application number: **79900290.2**

(22) Date of filing: **15.03.79**

(86) International application number:
**PCT/SE79/00057**

(87) International publication number:
**WO 79/01050 29.11.79 Gazette 79/24**

(51) Int. Cl.³: **F 16 B 19/06,**
**F 16 B 15/04, E 04 B 1/48**

(54) **EXPANSION NAILS, EXPANDING AT ONE OR MORE PLACES AFTER BEING DRIVEN IN.**

(30) Priority: **11.05.78 SE 7803073**

(43) Date of publication of application:
**01.10.80 Bulletin 80/20**

(45) Publication of the grant of the patent:
**13.06.84 Bulletin 84/24**

(84) Designated Contracting States:
**CH DE FR GB LU**

(56) References cited:
**CH - A - 263 364**
**DE - C - 811 638**
**SE - B - 404 719**

(73) Proprietor: **Billing, Lars**
**Värmlandsgatan 2**
**S-252 52 Helsingborg (SE)**

(72) Inventor: **Billing, Lars**
**Värmlandsgatan 2**
**S-252 52 Helsingborg (SE)**

(74) Representative: **Lindblad, Sture**
**Svedbergsplan 6**
**S-112 58 Stockholm (SE)**

Courier Press, Leamington Spa, England.

EP 0 015 922 B1

## Description

In joining two or more sections or parts of wood or other similar porous or compressable material by means of nailed joints, it is often desirable to reinforce the joint as far as possible in such a way that the parts are prevented from separating from each other. The simplest way of doing this so far has been to select the nails sufficiently long so that when driven in they completely penetrate all the parts to be joined so that the tips of the nails project from the opposite side to that of the nail head, the tip thereafter being bent to one side with a couple of blows and then knocked down into the surface of the material. This method is indeed simple but has several disadvantages. For example, it is sometimes not so easy to get at the nail tip for knocking it sideways. The surface of the material is also easily damaged, and it is difficult to recess the nail tip in the material, resulting in that the appearance of the finished joint is not particularly good.

From the patent publication DE—C— 811 638 there is known a rivet having an outer end portion of rhombic or circular shape. As the end portion is weak and has no pointed tip the rivet has to be inserted into a ready-made borehole before said end portion can be deformed in order to join two (or more) parts by riveting. Due to the characteristic features of the end portion it is not possible to use the rivet as a nail for joining parts of wood, board or the like.

The disadvantages and drawbacks mentioned above are substantially avoided by means of the present invention, which relates to a nail for joining parts of relatively soft, non-metallic material such as wood, board or the like, the nail expanding sideways at one or more places after being driven in.

The nail, according to the invention, has a pointed tip at the end portion of the shank of the nail, one or more local longitudinal narrow slits the length of which is greater than its width, with preferably at least one of said slits adjacent the pointed shank tip portion, and nail shank portions being slightly bent outwards to define the slit, said bent side portions of the shank being capable of bulging further outwardly without rupture and of expanding outwardly into the wall of the nail hole, the nail length being simultaneously shortened such that the nail in its final position has its total final length mainly within the jointed parts when the nail, after being driven mainly to its intended final position, is subjected to further blows axially at one of its ends using a suitable hold-up.

In accordance with a preferred embodiment of the invention the nail has slits at both end portions, said portions preferably being pointed.

In a further embodiment of the invention the nail shank has a mainly four-sided section and in still another embodiment the length of the slit is of the order of 4 times the nail shank diameter.

The material on either side of the slit being bent outwards somewhat enables the initiation of the outward bulge of the nail material on either side of the slit when the nail is subjected to further axial blows after having been driven in place, causing the nail ends to be displaced in towards the centre of the nail, the nail length suitably being adjusted so that the tip finishes up somewhat inside the outer surface of the material, or at least flush therewith.

The nature of the nail made in accordance with the invention is apparent in closer detail from the appended claims.

An embodiment example of a nail in accordance with the invention will be described below in detail with reference to an accompanying drawing where the Figure 1a shows the nail in its entirety, seen from one side, and Figure 1b the lower portion of said nail to a somewhat larger scale. Figures 2a, b, c and d show in section four different states of the nail in the process of making a joint in two pieces of wood, using a metal hold-up tool. Figure 3a shows the nail after being driven in, but before deformation of the expansion portions, and Figure 3b shows the appearance of the nail after deformation of the expansion portions, using two metal hold-up tools.

It is to be understood that the invention is not limited solely to what is apparent from the embodiment example, but all kinds of different modifications can be envisaged within the scope of the invention.

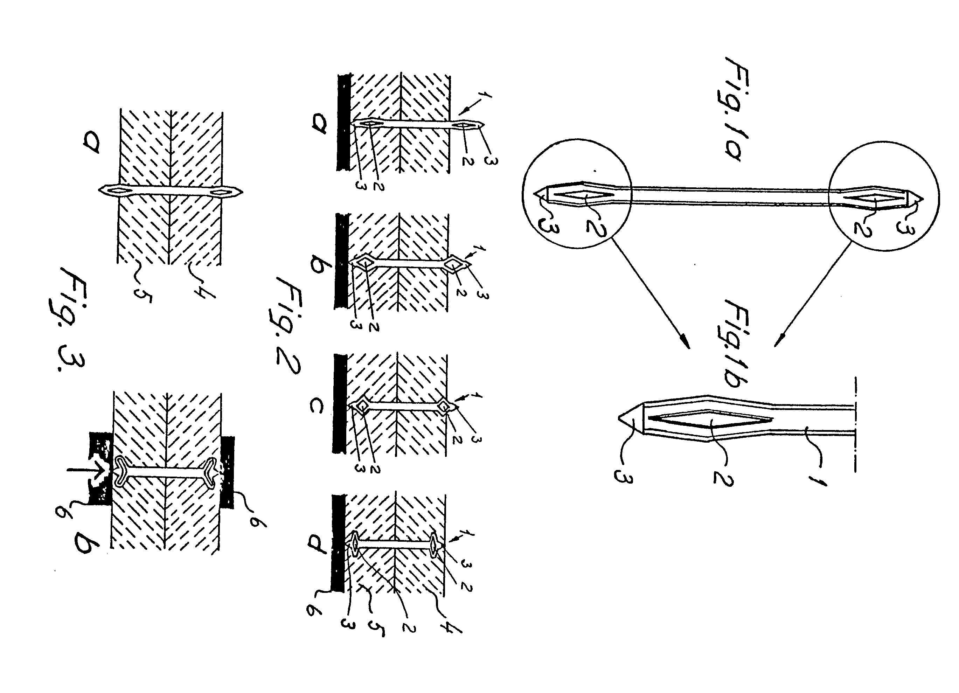

In the drawing figures, the numeral 1 denotes the nail body, made with a four-sided section in a conventional steel quality, which is thus relatively easily deformable. The numeral 2 denotes the slit with the material on either side thereof having slightly outwardly curved sides, and 3 denotes the tips. In many cases it is of great advantage to make the nail symmetrically with the tips and slits at both ends, since it then is not necessary to pay attention to what end of the nail is to be driven in, which is an advantage, especially with automatic processes using a nailing pistol or the like, for example. In Figures 2 and 3, the numerals 4 and 5 denote two pieces of wood which are to be joined by means of a nailed joint in accordance with the invention, a hold-up tool 6 in the form of relatively large metal plates being used.

In Figures 2a, b, c and d only one plate 6 is used, this being the hold-up plate, the nail being knocked in from its end facing from the plate until this end has completely gone into the material 4. In Figures 3a and b is shown how the tips can be pressed into the material 4 and 5 using blows or pressure and with the aid of two driving plates 6, expansion being obtained at the slits at the same time, these expansions penetrating into the material at both sides, resulting in positive retention of the pieces 4 and 5 by means of the nailed joint.

## Claims

1. Nail for joining parts of relatively soft, non-metallic material such as wood, board or the like, the nail having a pointed tip (3) at the end portion of the shank of the nail, characterised in that said nail is adapted to expand sideways at one or more places after being driven in, and comprises one or more local longitudinal narrow slits (2) the length of which is greater than its width, with preferably at least one of said slits (2) adjacent the pointed shank tip portion (3), nail shank portions beings slightly bent outwards to define the slit (2), said bent side portions of the shank being capable of bulging further outwardly without rupture and of expanding outwardly into the wall of the nail hole, the nail length being simultaneously shortened such that the nail in its final position has its total final length mainly, within the jointed parts when the nail (1), after being driven mainly to its intended final position, is subjected to further blows axially at one of its ends using a suitable hold-up (6).

2. Nail according to claim 1, characterised in the nail having slits (2) at both end portions, said portions preferably being pointed.

3. Nail according to claim 1 or 2, characterised in the nail shank having a mainly four-sided section.

4. Nail according to claim 1 or 2, characterised in the length of the slit (2) being of the order of 4 times the nail shank diameter.

## Revendications

1. Clou pour assembler des pièces en matière non métallique relativement tendre telle que bois, panneau de fibres ou analogues, le clou ayant une extrémité pointue (3) à la partie terminale de la tige du clou, caractérisé par le fait que ledit clou est conçu pour s'épanouir latéralement en un ou plusieurs endroits après avoir été enfoncé et comporte une ou plusieurs fentes (2) locales longitudinales étroites dont la longueur excède la largeur, und au moins des-dites fentes (2) étant de préférence située à proximité de la pointe (3) de la tige, des parties de la tige du clou étant légèrement cintrées vers l'extérieur pour définir la fente (2), lesdites parties latérales cintrées de la tige étant capables de se déformer davantage vers l'extérieur sans se rompre et de s'épanouir vers l'extérieur dan la parois du trou du clou, la longueur du clou étant simultanément raccourcie de sorte que le clou dans sa position finale a une longueur totale finale principalement de même ordre que l'épaisseur des pièces assemblées lorsque le clou (1), après avoir été, enfoncé principalement jusqu'à sa position finale désirée, est soumis à d'autres chocs axiaux appliqués à une de ses extrémités en utilisant un arrêtoir (6) adapté.

2. Clou selon la revendication 1, caractérisé par le fait que le clou a des fentes (2) aux deux extrémités, lesdites extrémités étant de préfer-ence pointues.

3. Clou selon la revendication 1 ou 2, caractérisé par le fait que la tige du clou a une section principalement quadrangulaire.

4. Clou selon la revendication 1 ou 2, caractérisé par le fait que la longueur de la fente (2) est de l'order de quatre fols le diamètre de la tige du clou.

## Patentansprüche

1. Nagel zum Verbinden von Teilen aus verhältnismäßig weichem, nichtmetallischem Material, wie Holz, Spanplatten o. dgl., mit zugespitztem Ende (3) des Nagelschaftes, dadurch gekennzeichnet, daß der Nagel zwecks seitlichem Ausspreizen nach Eintreiben desselben an einer oder mehreren Stellen angeordnet ist einen oder mehrere lokale schmale Längsschlitze (2) aufweist, deren Länge größer als deren Breite is, wobei vorzugsweise wenigstens einer der genannten Schlitze (2) nahe am zugespitzten Schaftendteil (3) liegt, wobei der Schlitz durch leichtes beiderseitiges Ausbiegen von Nagelschaftteilen gebildet ist und diese ausgebogenen Nagelschaftteile ohne abzubrechen weiter ausgebogen werden können und dabei nach außen in die Wandung des Nagelloches spreizbar sind, wodei die Nagellänge gleichzeitung so verkürzt wird, daß der Nagel in seiner endgültigen Eintreibstellung mit seiner endgültigen Länge hauptsächlich innerhalb der verbundenen Teile liegt, wenn der Nagel (1), nach vorherigem Eintreiben bis fast in seine vorgesehene endgültige Stellung, weiteren Schlägen in Längsrichtung des Nagels an einem seiner Enden ausgesetzt und dabei am anderen Ende ein passender Gegenhalter (6) verwendet wird.

2. Nagel nach Anspruch 1, dadurch gekennzeichnet, daß der Nagel an seinen beiden Endbereichen Schiltze (2) aufweist, sowie daß die beiden Endbereiche vorzugsweise zugespitzt sind.

3. Nagel nach Anspruch 1 oder 2, dadurch gekennzeichnet, daß der Nagelschaft etwa vierseitigen Querschnitt hat.

4. Nagel nach Anspruch 1 oder 2, dadurch gekennzeichnet, daß die Länge des Schlitzes (2) in der Größenordnung des vierfachen Nagel-schaftdurchmessers liegt.

Fig.1a    Fig.1b

Fig. 2

Fig. 3.